# EUROPÄISCHE PATENTSCHRIFT

(11) **EP 3 245 084 B1**
(45) Veröffentlichungstag und Bekanntmachung des Hinweises auf die Patenterteilung: **05.05.2021**
(21) Anmeldenummer: 16716819.4
(22) Anmeldetag: 12.01.2016
(51) Int. Cl.: B60J 10/265, B60J 10/75, B60R 13/04, B60Q 1/26, F21S 43/237

(54) **BELEUCHTETE ZIERLEISTE**
BACK-LIT DECORATIVE STRIP
BAGUETTE DÉCORATIVE ÉCLAIRÉE

(30) Priorität: 12.01.2015 DE 102015100327
(43) Veröffentlichungstag der Anmeldung: 22.11.2017
(73) Patentinhaber: DURA Automotive Holdings U.K., Ltd., Birmingham, B35 7AG (GB)
(72) Erfinder: HUNDT, Torsten, 58809 Neuenrade (DE); ADIS, Karl-Heinz, 72108 Rottenburg (DE); GIESSLER, Ralf, 71034 Böblingen (DE); GÖSSL, Illdiko, 70567 Stuttgart (DE); PASTOR, Joaquin Rodrigo, 70165 Sindelfingen (DE); STORZ, Björn, 71069 Sindelfingen (DE); TISLJAR, Denis, 70180 Stuttgart (DE); VEEH, Margit, 89077 Ulm (DE); WIRSING, Michael, 75391 Gechingen (DE); STEGEMANN, Jan, 58809 Neuenrade (DE); RÖHNER, Stephan, 44287 Dortmund (DE)
(74) Vertreter: btb IP Bungartz Baltzer Partnerschaft mbB Patentanwälte
(86) Internationale Anmeldenummer: PCT/DE2016/100011
(87) Internationale Veröffentlichungsnummer: WO 2016/112897

(56) Entgegenhaltungen:
- EP-A1- 2 363 324
- EP-A2- 2 298 607
- EP-A2- 2 662 241
- WO-A1-2015/154972
- DE-A1- 10 033 774
- DE-A1- 19 828 108
- DE-A1-102011 106 318
- DE-A1-102014 015 186
- DE-U1-202013 008 321
- DE-U1-202013 008 321
- GB-A- 2 514 449
- US-A1- 2012 297 726
- US-A1- 2013 135 880

## Beschreibung

Die Erfindung betrifft eine Kombination eines Dichtungsprofils und einer hinterleuchteten Zierleiste für ein Kraftfahrzeug.

Insbesondere betrifft die Erfindung eine Zierleiste als Abdeckleiste einer Dichtleiste für den Fensterschacht einer Fahrzeugtür als Zierleistenanordnung an einem Fahrzeug und ein Kraftfahrzeug mit einer solchen Zierleistenanordnung. Die Zierleiste umfasst eine Profilleiste, die bei bestimmungsgemäßer Endmontage am Fahrzeug eine vom Fahrzeug weg gerichtete Zierseite mit einer äußerlich sichtbaren Zierfläche der Profilleiste und einer zum Fahrzeug hin gerichteten äußerlich nicht sichtbaren Funktionsseite definiert, und wobei ein Leuchtmittel in Form eines Lichtwellenleiters vorgesehen ist, der nach bestimmungsgemäßer Endmontage auf Seiten der Funktionsseite angeordnet ist, um zumindest einen Teil der Profilleiste bei bestimmungsgemäßer Endmontage am Fahrzeug zu hinterleuchten.

Es ist bekannt, Zierleisten für Kraftfahrzeuge mit Leuchtmitteln zu versehen, um das Fahrzeug optisch aufzuwerten. So offenbart beispielsweise die US 2013/0135880 A1 eine Dachreling mit integrierter, nach unten abstrahlender Beleuchtung.

Die Offenlegungsschrift DE 102008 027 128 A1 offenbart eine Abdeck- bzw. Dichtleiste für ein Kraftfahrzeug mit einer Profilleiste, in die eine LED zur Beleuchtung eines auf der Außenfläche angeordneten Verkleidungselements bzw. einer auf der Außenfläche vorgesehenen Abdeckschicht eingebettet ist. Die Konstruktion ist allerdings verhältnismäßig komplex und aufwendig in der Herstellung und ermöglicht ferner wegen der nur an diskreten Positionen vorgesehenen LEDs keine durchgängig gleichförmige Beleuchtung über die gesamte Leistenlänge hinweg. Außerdem wird es als Nachteil angesehen, dass die Abdeck- bzw. Dichtleiste sich aufgrund ihres äußeren Aufbaus von außen als beleuchtete Leiste identifizieren lässt.

Die DE 102006 049 872 A1 und die DE 20 2013 008 321 U1 offenbaren eine Zierleiste mit einem als separates Bauteil in die Zierleiste eingelassenen Beleuchtungsmodul. Das Beleuchtungsmodul erlaubt nur einen eingeschränkten Beleuchtungsbereich und der Aufbau der Zierleiste ist durch die Notwendigkeit der Einbringung eines Ausschnitts in die Zierleiste komplex. Hinzu kommt auch hier, dass diese Art des Aufbaus einer Zierleiste die optische Wertigkeit schmälert, weil die sichtbare Zierleistenoberfläche durchbrochen ist. Durchleuchtete Zierleisten mit integrierten Leuchtmitteln sind ferner aus der DE 198 28 108 A1 und der EP 2 363 324 A1 bekannt.

Eine ebenfalls mehrteilige, komplex aufgebaute Zierleiste mit integrierten Leuchtmitteln offenbart auch die Druckschrift EP 2 063 057 A1.

Die EP 1 772 667 A2 offenbart ein Kunststoffbauteil mit integrierter Lichtquelle. Hierbei sind die Leuchtelemente zumindest teilweise in die Kunststoff-Formmasse eines Sichtteils eingebettet, was die Herstellung des Kunststoffbauteils beträchtlich verkompliziert. Außerdem ist die Zierleiste aus Kunststoffen zu fertigen, die durchleuchtet werden können, die allerdings gegenüber anderen Materialien einen weniger wertigen Eindruck vermitteln können.

Letztgenannter Nachteil der eingeschränkten Materialauswahl trifft auch auf die in den Druckschriften EP 2 556 996 A2 und EP 2 363 324 A1 offenbarten beleuchteten Zierleisten zu.

Eine Leiste mit einem durchleuchteten, transparenten Leistenteil offenbart auch die US 2003/0002294 A Um das Leuchtmittel von außen nicht sichtbar in Erscheinung treten zu lassen, strahlt es seitlich in das transparente Leistenteil ein und ist durch eine zusätzliche, von außen erkennbare Abdeckung verdeckt. Dieser Aufbau ist verhältnismäßig aufwendig, erfordert zusätzliche Bauteile und erlaubt keine sehr flach und schmal bauenden Leisten. Einen insgesamt vergleichbaren und daher auch ähnlich nachteilhaften Aufbau beschreibt die Schrift DE 201 10 352 U1.

Eine Zierleiste mit einem Spalt zwischen der Karosserie eines Fahrzeugs und einer inneren Funktionsseite ist in der WO 2015 154 972 A1 beschrieben, bei der Lichtquellen auf die Innenseite der Funktionsseite aufgeklebt sind.

Es ist daher Aufgabe der Erfindung, eine Kombination eines Dichtungsprofils und einer beleuchteten Zierleiste der eingangs genannten Art sowie ein Kraftfahrzeug mit einer solchen Kombination zur Verfügung zu stellen, die konstruktiv einfach aufgebaut und kostengünstig herzustellen ist. Sie sollte zudem flach aufbauen und Platz sparend montierbar sein, aber dennoch einen gegenüber den bekannten mit Leuchtmitteln versehenen Zierleisten optisch höherwertigen Eindruck vermitteln können und sich äußerlich von nicht beleuchteten Zierleisten möglichst wenig bis gar nicht unterscheiden. Ferner sollte die Zierleiste den Einsatz von nicht-transparenten Materialien ermöglichen.

Diese Aufgabe wird nach der Erfindung durch eine Kombination eines Dichtungsprofils und einer hinterleuchteten Zierleiste nach Anspruch 1 und ein Kraftfahrzeug nach Anspruch 12 gelöst. Die Kombination des Dichtungsprofils und der hinterleuchteten Zierleiste ist dabei derart ausgebildet, dass bei bestimmungsgemäßer Endmontage am Fahrzeug zwischen Zierleiste und zum Beispiel benachbarter Fahrzeugaußenfläche, insbesondere zwischen Profilleiste und zum Beispiel benachbarter Fahrzeugaußenfläche, ein Lichtspalt ausgebildet wird, durch den das von dem Lichtwellenleiter emittierte Licht nach außen sichtbar hervorzutreten vermag.

Als Leuchtmittel ist erfindungsgemäß ein Lichtwellenleiter vorgesehen, der sich bei bestimmungsgemäßer Endmontage auf Seiten der Funktionsseite entlang zumindest eines Teils der Profilleiste erstreckt, wobei der Lichtwellenleiter außerhalb des Profilleistenquerschnitts angeordnet ist und diesen nicht durchdringt.

Mit dieser Ausgestaltung wird ein Einbetten von Leuchtmitteln in die Profilleiste überflüssig und die Notwendigkeit der Verwendung von durchleuchtbaren (transparenten oder transluzenten) Materialien kann entfallen, wobei die Verwendung von transluzenten oder transparenten Profilleisten natürlich nach wie vor möglich bleibt. Neben transparenten oder transluzenten Materialien können auch hochwertige, nicht durchleuchtbare Metallleisten Verwendung finden, die auf der Funktionsseite der Profilleiste befindliche Baugruppenkomponenten, insbesondere das Leuchtmittel bzw. den Lichtwellenleiter selbst, effektiv optisch kaschieren. Ein die Materialhomogenität der Profilleiste aufhebendes Bauteil ist nicht erforderlich. Die Profilleiste wird auch nicht in einer von außen sichtbaren Weise von einem Bauteil, etwa dem Lichtwellenleiter, durchdrungen.

Die Lichtstrahlen werden an der der Zierseite abgewandten Seite der Profilleiste (auf der Funktionsseite) erzeugt, hinterleuchten die Zierleiste, insbesondere die Profilleiste, und treten von hinten durch den zwischen der angrenzenden Fahrzeugaußenfläche und der Zierleiste bestehenden Spalt, der von dem emittierten Licht durchleuchtet wird, nach außen aus. Hiermit wird eine indirekte Beleuchtung durch die Zierleiste erzeugt, die sich bei entsprechender Anordnung des Lichtwellenleiters gleichmäßig über die Länge der Zierleiste erstrecken kann. Im endmontierten Zustand ist die Zierleiste äußerlich von anderen, nicht hinterleuchteten Zierleisten nicht zu unterscheiden. Lediglich eine kleine Schattenfuge, die bei eingeschalteten Leuchtmittel als Lichtspalt dient, kann zu erkennen sein, deren Breite bei geschickter Dimensionierung aber derart gering gehalten werden kann, dass sie optisch nicht ins Gewicht fällt.

Die Fahrzeugaußenfläche ist die an die im Bereich des Lichtspalts an die Zierleiste angrenzende äußere Oberfläche des Fahrzeugs, die den Lichtspalt zusammen mit der Zierleiste begrenzt. Dies kann insbesondere die lackierte Oberfläche der zur Profilleiste benachbarten Karosserieaußenhaut sein, also insbesondere das lackierte Karosserieblech. Sofern andere Teile - etwa ein Schenkel eines Dichtungsprofils, auf das die Zierleiste aufgesetzt ist - zwischen Zierleiste bzw. Profilleiste und Karosserieblech hineinragen, kann die Fahrzeugaußenfläche auch von der Oberfläche dieser Teile gebildet sein.

Der Lichtwellenleiter ist auf der der Zierseite abgewandten Seite der Profilleiste angeordnet (auf der Funktionsseite), befindet sich jedoch außerhalb des von der Profilleiste bestimmten Profilleistenquerschnitts, ist also insbesondere nicht in den Profilleistenquerschnitt eingebettet. Es kann vorgesehen sein, dass der Lichtwellenleiter auf der Funktionsseite der Profilleiste an der äußeren Oberfläche der Profilleiste gehalten ist. Alternativ kann aber auch vorgesehen sein, dass die am Kraftfahrzeug angeordnete Dichtung den Lichtwellenleiter trägt oder dieser an der Kraftfahrzeugaußenfläche auf Seiten der Funktionsseite der Zierleiste angebracht ist.

Die Profilleiste besteht bevorzugt aus einem einzigen, homogenen Werkstoff. Als Werkstoff kommen neben üblicherweise für Zierleisten verwendeten Metallen wie Aluminium oder (Edel-)Stahl insbesondere thermoplastische Kunststoffe in Betracht, beispielsweise PMMA, SAN, PC oder ABS.

Der Profilleistenquerschnitt weist in einer vorteilhaften Ausgestaltung einen Hauptschenkel auf, dessen nach außen gerichtete Oberfläche die äußerlich sichtbare Zierfläche bildet. Von diesem Hauptschenkel gehen bevorzugt ein oder mehrere Funktionsschenkel ab, mit der die Profilleiste mit einem diese tragenden Dichtungsprofil zusammenwirkt. Insbesondere kann vorgesehen sein, dass die Funktionsschenkel in das Dichtungsprofil eingreifen, um an diesem gehalten zu werden.

Der Lichtwellenleiter kann auf der Funktionsseite rückseitig an dem Hauptschenkel oder einem Funktionsschenkel angeordnet sein. Unabhängig davon, ob der Lichtwellenleiter am Hauptschenkel oder an einem Funktionsschenkel angeordnet ist, kann vorgesehen sein, dass an dem den Lichtwellenleiter tragenden Schenkel der Profilleiste eine Halterung für den Lichtwellenleiter vorgesehen ist. Diese Halterung kann derart ausgebildet sein, dass der Lichtwellenleiter in die Halterung verrastend eingeklipst oder hierin eingeklebt werden kann, gegebenenfalls einschließlich einer den Lichtwellenleiter umgebenden Ummantelung. Eine derartige Halterung kann insbesondere von einer sich entlang der Profilleiste erstreckenden Aufnahmenut gebildet sein. Eine solche Halterung kann allerdings für den Fall, dass das die Profilleiste tragende Dichtungsprofil oder ein sonstiges zur Profilleiste benachbartes Bauteil den Lichtwellenleiter trägt, auch in vergleichbarer Weise in diesem Bauteil vorgesehen sein.

Das Leuchtmittel kann zum Beispiel an dem bei bestimmungsgemäßem Einbau untersten Funktionsschenkel angeordnet sein, der sich in einer vorteilhaften Ausgestaltung nach bestimmungsgemäßer Endmontage am Fahrzeug von einem die untere Sichtkante des Hauptschenkels ausbildenden und von einem einen spitzen Winkel einschließenden Knick im Materialverlauf ausgehend einwärts gerichtet zur Dichtung hin erstreckt. Die zur Fahrzeugaußenfläche gerichtete Seite dieses auf der Funktionsseite der Profilleiste befindlichen Funktionsschenkels trägt in einer bevorzugten Ausgestaltung den Lichtwellenleiter. Es kann aber auch vorgesehen sein, dass der Lichtwellenleiter auf der Rückseite des Hauptschenkels gehalten ist.

Der Lichtspalt, durch den das vom Lichtwellenleiter emittierte Licht nach außen hervortreten soll, wird insbesondere durch den Abstand, den die unterste Sichtkante des die Zierfläche bildenden Hauptschenkels der Profilleiste zur angrenzenden Fahrzeugaußenfläche aufweist, definiert.

Um die Breite des Lichtspalts über die gesamte Leistenlänge der typischerweise dünnwandigen und daher in sich flexiblen Profilleiste konstant zu halten, kann vorgesehen sein, dass der zwischen Profilleiste und Fahrzeugaußenfläche angeordnete Lichtwellenleiter, gegebenenfalls zusammen mit einer dem Lichtleiter zuzurechnenden Ummantelung, als Distanzhalter fungiert, indem sich die Profilleiste mittelbar oder unmittelbar über den Lichtwellenleiter auf der den Fahrzeugaußenfläche abstützt. Hierdurch kann die Lichtspaltbreite definiert festgelegt werden und es steht nicht zu befürchten, dass die Lichtspaltbreite über die Länge der Leiste infolge von Fertigungsungenauigkeiten oder sonstigem Materialverzug variiert. Unmittelbares Abstützen bedeutet in diesem Zusammenhang, dass der Lichtwellenleiter direkt mit der Profilleiste und der Fahrzeugaußenfläche in Kontakt steht, um den Abstand der Profilleiste von der Fahrzeugaußenfläche im Bereich des Lichtspalts zu definieren. Mittelbares Abstützen bedeutet in diesem Zusammenhang, dass zwischen Lichtwellenleiter und Profilleiste und/oder zwischen Lichtwellenleiter und Fahrzeugaußenfläche zumindest ein Teil eines weiteren Bauteils hineinragt, zum Beispiel ein Teil des Dichtungsprofils, der Lichtwellenleiter aber in die den Abstand zwischen Profilleiste und Fahrzeugaußenhaut gemeinsam definierenden Bauteile den Abstand mitbestimmend eingebunden ist. Im Falle des mittelbaren Abstützens kann auch ein von dem Dichtungsprofil getrennter Distanzhalter vorgesehen sein, auf dem sich insbesondere der den Lichtwellenleiter tragende Schenkel des Profilleistenquerschnitts mittelbar über den Lichtwellenleiter abstützt. Dieser Distanzhalter kann auch aus einem transparenten Material gefertigt sein, so dass insbesondere dann, wenn sich der Lichtwellenleiter selbst auf diesem Distanzhalter abstützt, das emittierte Licht durch den Distanzhalter hindurch zum Lichtspalt geleitet werden kann.

Für den Lichtwellenleiter kommen insbesondere (optische) Glasfasern oder Acrylfasern als Licht leitendes Material bzw. als Licht leitender Strang in Betracht. Der Lichtwellenleiter kann dabei Faserbündel umfassen oder von einem einzelnen weitgehend homogenen Materialstrang gebildet sein.

Bevorzugt ist der Querschnitt des Lichtwellenleiters rund. Je nach den konstruktiven Gegebenheiten des Einzelfalls kann der Lichtwellenleiter aber auch andere Querschnittsformen aufweisen.

Der Lichtwellenleiter kann eine transparente oder transluzente Ummantelung aufweisen. Dies kann insbesondere eine Ummantelung aus einem geeigneten Kunststoff sein, etwa aus Polypropylen und/oder Polyethylen.

Eine derartige Ummantelung kann als Schutzummantelung dienen, die den nicht selten bruch- oder stoßempfindlichen Licht leitenden inneren Strang des Lichtwellenleiters wirksam vor Witterungseinflüssen und Beschädigungen schützt. Außerdem kann eine solche Schutzummantelung dazu dienen, dass insbesondere dann, wenn der Lichtwellenleiter in direktem Kontakt mit der Fahrzeugaußenhaut steht, letztere nicht durch das gegebenenfalls harte oder gar abrasiv wirkende Licht leitende Material des Lichtwellenleiters beschädigt wird.

Außerdem kann eine solche Ummantelung als eine den Querschnitt bestimmende Ummantelung des Licht leitenden Materials des Lichtwellenleiters vorgesehen sein, die es ermöglicht, dem Verbund aus Licht leitendem Material bzw. inneren Strang des Lichtwellenleiters und Ummantelung des LichtWellenleiters eine weitgehend freie Querschnittform zu geben, die sich von der Querschnittsform des das Licht leitenden Materials bzw. inneren Strangs des Lichtwellenleiters unterscheidet. So kann ein beispielsweise materialbedingt nur mit rundem Querschnitt herstellbares Licht leitendes Material in eine einen Rechteckquerschnitt aufweisende Ummantelung eingebettet sein, so dass sich ein rechteckiger Lichtwellenleiter als Verbund ergibt.

Hinzu kommt, dass eine derartige transparente oder transluzente Ummantelung die Funktion einer den Lichtschein beeinflussenden Ummantelung wahrnehmen kann, in dem die Ummantelung zum Beispiel farbig und/oder milchig durchscheinend ausgebildet ist und so die Eigenschaft des emittierten Lichts beeinflusst. So kann durch eine den Lichtschein beeinflussenden Ummantelung für eine bestimmte Lichtfarbe sorgen oder dafür, dass eine besonders diffuse, weiche oder eine eher klare, gerichtete Lichtabstrahlung erfolgt.

Eine den Lichtschein beeinflussende Ummantelung kann auch dadurch gebildet sein, dass an Stellen, an denen ein seitlicher Lichtaustritt aus dem das Licht leitenden Strang des Lichtwellenleiters nicht erwünscht ist, als lichtundurchlässige Bereiche ausgebildet sind. So kann zum Beispiel auf einem Teil der äußeren Oberfläche der Ummantelung eine Reflexionsbeschichtung vorgesehen sein, die Lichtstrahlen, die aus in diesem Teil seitlich aus dem Lichtwellenleiter heraustreten "wollen", in den Lichtwellenleiter zurückreflektiert. Dies kann die Lichtausbeute an den Stellen, an denen ein Lichtaustritt aus dem Lichtwellenleiter erwünscht ist, erhöhen.

Ein weiterer Vorteil der vorstehend beschriebenen Erfindung ist, dass die eigentliche Erzeugung des Lichts durch eine Lichtquelle innerhalb der Fahrzeugkarosserie erfolgen kann. So kann zum Beispiel im Türinnenbereich, im Fahrzeuginnenraum oder einem sonstigen vor Außenfeuchtigkeit und Witterungseinflüssen geschützten Trockenraum des Fahrzeugs eine LED oder eine sonstige geeignete Lichtquelle vorgesehen sein, deren emittiertes Licht an zentraler, insbesondere im Fahrzeuginnenraum liegender Stelle in den Lichtwellenleiter eingespeist wird, wobei das von der Lichtquelle emittierte Licht dann über den Lichtwellenleiter nach außen geführt wird. Die Einspeisung des Lichts in den Lichtwellenleiter kann über an sich im Stand der Technik bekannte Steckverbindungen erfolgen. Besonders vorteilhaft in diesem Zusammenhang ist, dass die Größe und Leistung der Lichtquelle weitgehend frei gewählt werden kann, während die außerhalb der Fahrzeugkarosserie im Bereich der Zierleiste vorzusehenden Beleuchtungselemente kaum nennenswerten Bauraum in Anspruch nehmen.

Um das Licht seitlich aus dem Lichtwellenleiter austreten zu lassen, sind im Lichtwellenleiter Störstellen vorgesehen, an denen das sich im Lichtwellenleiter ausbreitende Licht umgelenkt wird, so dass es seitlich aus dem Lichtwellenleiter und bei Vorhandensein einer Ummantelung aus dem lichtdurchlässigen Bereich der Ummantelung heraustreten kann, um die Profilleiste zu hinterleuchten. Derartige Störstellen können von im Lichtwellenleiter eingebetteten, insbesondere metallischen Fremdpartikeln gebildet sein, die bei Herstellung des Lichtwellenleiters gezielt das Lichtwellenleitermaterial eingebracht werden. Derartige Störstellen bewirken, dass das in den Lichtwellenleiter eingespeiste Licht nicht in diesem "gefangen" bleibt sondern der Lichtwellenleiter aus sich heraus zu leuchten scheint.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine an einem Dichtungsprofil befestigte Zierleiste nach einer ersten Ausführungsform,
- Fig. 2: eine an einem Dichtungsprofil befestigte Zierleiste nach einer zweiten Ausführungsform.

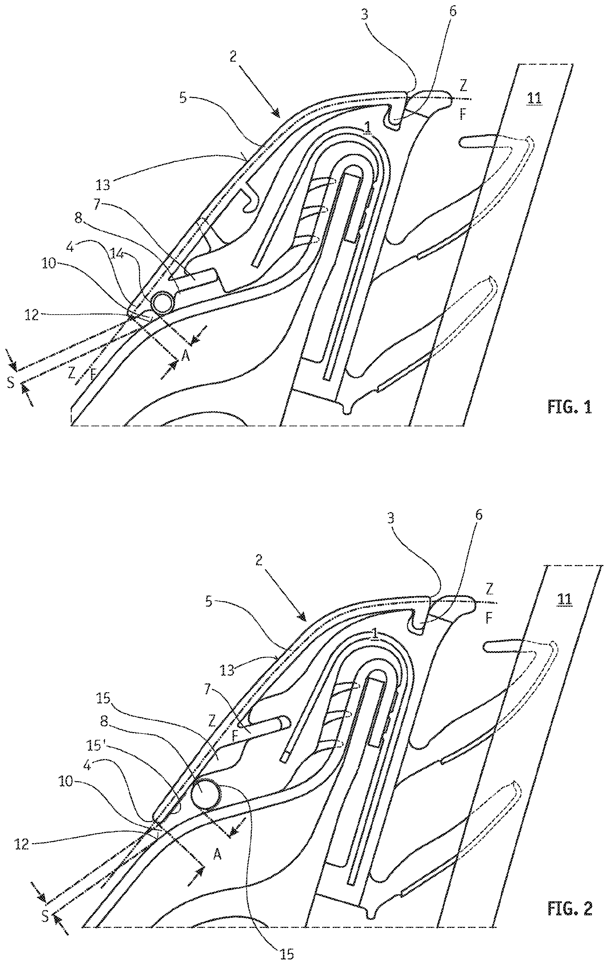

In Figur 1 ist eine auf einem Dichtungsprofil 1 befestigte Profilleiste 2 in Form einer Fensterschachtabdeckleiste dargestellt. Eine weitere Anwendung wäre zum Beispiel ein Bordkantenzierstab oder eine Blendenleiste zur Abdeckung etwa der A-, B- oder C- Säule. Das Dichtungsprofil 1 wird mit seinem U- förmigen, durch einen eingelegten Metallbügel verstärkten Abschnitt auf ein Karosserieteil eines Kraftfahrzeugs aufgesteckt und dichtet den Türschacht zur Fensterscheibe 11 hin ab. Die Profilleiste 2 ist eingerichtet, dieses Dichtungsprofil 1 abzudecken und als Zierteil optisch möglichst hochwertig zu kaschieren. Hierzu weist die Profilleiste 2 bzw. der vom Material der Profilleiste 2 gebildete Profilleistenquerschnitt einen bogenförmigen Hauptschenkel 5 auf, dessen nach außen weisende Oberfläche die bei bestimmungsgemäßer Montage äußerlich sichtbare Zierfläche 13 der Profilleiste 2 bildet. Die Zierfläche 13 ist durch eine obere Sichtkante 3 und eine untere Sichtkante 4 begrenzt. Im Bereich dieser Sichtkanten 3, 4 knickt der Hauptschenkel 5 nach innen ab und bildet einen oberen Funktionsschenkel 6 und einen unteren Funktionsschenkel 7 aus, mittels derer die Profilleiste 2 in die Dichtleiste 1 eingreift, um an dieser gehalten zu werden. Die in den Figuren entlang des Hauptschenkels 5 verlaufende strichpunktierte Linie soll die Grenze zwischen der Zierseite Z und der Funktionsseite F veranschaulichen.

Die Zierleiste weist neben der bevorzugt materialhomogenen Profilleiste 2 als Leuchtmittel einen Lichtwellenleiter 8 auf. Dieser ist unmittelbar von der der Fahrzeugaußenfläche 12 zugewandten Oberfläche des unteren Funktionsschenkels 7 gehalten und insbesondere durch Einklipsen und/oder Verkleben mit der Profilleiste 2 verbunden. Die Profilleiste 2 bzw. der untere Funktionsschenkel 7 der Profilleiste 2 dient somit als Träger für den Lichtwellenleiter 8.

Die Profilleiste 2 ist bevorzugt aus einem nicht lichtdurchlässigen Material hergestellt, so dass auf der Funktionsseite F liegende (in den Figuren die im Wesentlichen rechts vom Hauptschenkel 5 liegenden) Baugruppenkomponenten, also insbesondere die Dichtleiste 6 und der Lichtwellenleiter 8 von außen nicht durch die Profilleiste 2 hindurch erkennbar sind bzw. durch die Profilleiste 2 wirksam abgedeckt sind.

Es ist erkennbar, dass zwischen der zur Fahrzeugaußenfläche 12 gerichteten Oberfläche des unteren Funktionsschenkels 7 und der Fahrzeugaußenfläche 12 bzw. zwischen der unteren Sichtkante 4 und der Fahrzeugaußenfläche 12 ein Spalt mit einer Spaltbreite S verbleibt, der bei nicht aktivem bzw. eingeschalteten Lichtwellenleiter 8 lediglich als Schattenfuge erkennbar ist. Nach Aktivierung bzw. Einschalten des Lichtwellenleiters 8 strahlt dieser die Fahrzeugaußenfläche jedoch unmittelbar an und ein großer Teil des emittierten Lichts tritt durch den nun als Lichtspalt 10 wirkenden Spalt nach außen. Hierdurch wird eine edel anmutende, indirekte Beleuchtung geschaffen, die überwiegend nach unten hin abstrahlt, was das Blenden von Personen beim Ein- oder Aussteigen wirksam vermeidet.

In Figur 1 ist ferner erkennbar, dass der untere Funktionsschenkel 7 der Profilleiste 2 sich unmittelbar über den daran gehaltenen Lichtwellenleiter 8 an der Fahrzeugaußenfläche 12 abstützt und somit die Profilleiste 2 über den Lichtwellenleiter 8 zur Fahrzeugaußenfläche 12 definiert auf Abstand gehalten wird. Der Lichtwellenleiter 8 bildet also mitsamt seiner den Licht leitenden Strang des Lichtwellenleiters 8 umgebenden Ummantelung 14 einen Distanzhalter, der die gleichmäßige Beabstandung des den Lichtwellenleiter 8 tragenden Profilleistenschenkels von der Fahrzeugaußenfläche 12 und damit eine über die Profilleistenlänge konstante Lichtspaltbreite S gewährleistet. Die Lichtspaltbreite S liegt bevorzugt im Bereich zwischen 1 mm und 4 mm, besonders bevorzugt zwischen 2 mm und 3 mm. Je nach Lichtausbeute der jeweils verwendeten Konstruktion und nach Lichtstärke kommen aber auch Lichtspaltbreiten S in Betracht, die unterhalb 1 mm liegen. Der kürzeste Abstand A zwischen der Außenfläche des Lichtwellenleiters 8 und der Sichtkante 4 liegt bevorzugt bei maximal 5 mm.

Die sich entlang der Profilleiste 2 erstreckende und bevorzugt in der Profilleiste 2 selbst vorgesehene Lichtwellenleiterhalterung ist beispielhaft als eine den Lichtwellenleiter 8 umgreifende Aufnahmenut ausgebildet, in die der Lichtwellenleiter 8 bei seiner Montage samt gegebenenfalls vorgesehener Ummantelung 14 verrastend hineingedrückt werden kann. Diese Art der Ausgestaltung der Lichtwellenleiterhalterung ermöglicht eine besonders einfache Integrierung der Halterung in die Profilleiste 2 unmittelbar im beim Herstellen der Profilleiste 2, etwa im Extrusions- oder Strangpressprozess. Andere Arten von Halterungen kommen selbstverständlich auch in Betracht.

Die in Figur 2 gezeigte Profilleiste 2 unterscheidet sich von der in Figur 1 gezeigten Profilleiste 2 im Wesentlichen durch die andersartige Form des Profilleistenquerschnitts und die Anordnung des Lichtwellenleiters 8. Der Lichtwellenleiter 8 ist nicht direkt an der Profilleiste 2 gehalten, sondern an dem auf der Funktionsseite F der Profilleiste 2 befindlichen Dichtungsprofil 1.

Um auch bei der in Figur 2 gezeigten Ausführungsform der Profilleiste 2 zu gewährleisten, dass der sich entlang der Profilleiste 2 erstreckende Lichtspalt 10 konstant gehalten wird, ist auch hier der Lichtwellenleiter 8 in die Kette der Bauteile, auf die sich die Profilleiste 2 abstützt und über die die Lichtspaltbreite S konstant gehalten wird, maßgeblich eingebunden.

Durch diese Anordnung wird - wie auch bei der in Figur 1 gezeigten Ausführungsform - eine eindeutige Positionierung des Lichtwellenleiters 8 innerhalb der Zierleistenanordnung gewährleistet, also insbesondere innerhalb der Anordnung von Profilleiste 2, Dichtungsprofil 1, Lichtspalt 10 und Karosserieaußenfläche 12. Dies wiederum vermeidet einen nicht parallelen Verlauf von benachbarten Bauteilen, was sich in einer unterschiedlich intensiven Ausleuchtung des Lichtspalts 10 äußern könnte.

Der Lichtwellenleiter 8 ist in der in Figur 2 gezeigten Ausführungsform in einer im Dichtungsprofil 1 vorgesehenen Halterung aufgenommen, die wie bei der Profilleiste 2 in Figur 1 von einer sich entlang des Dichtungsprofils 1 erstreckenden Aufnahmenut gebildet ist. Der Lichtwellenleiter 8 wird dabei von Schenkeln dieser Aufnahmenut umgriffen. Hierdurch steht - anders als in Figur 1 - nicht mehr der Lichtwellenleiter 8 selbst in direktem Kontakt mit der Fahrzeugaußenfläche 12 und der rückseitigen Oberfläche der Profilleiste 2, sondern das Material des Dichtungsprofils 1. Die Profilleiste 2 stützt sich dennoch mittelbar auf dem Lichtwellenleiter 8 ab, denn dieser ist nach wie vor maßgeblich in die Kette der die Lichtspaltbreite S definierenden Bauteile maßgeblich eingebunden. Eine gegebenenfalls vorgesehene Ummantelung 14 des Lichtwellenleiters 8, wie sie in Figur 1 gezeigt ist und wie sie auch für das Ausführungsbeispiel in Figur 2 denkbar ist, entfaltet dann keine Wirkung mehr als Schutzummantelung.

In Figur 2 ist ferner die Möglichkeit illustriert, eine Reflexionsfläche 15 auf dem dem Lichtwellenleiter 8 zugewandten Oberflächenbereich des Dichtungsprofils 1 vorzusehen. Die Reflexionsfläche 15 ist, wie in Figur 2 gezeigt, bevorzugt auf der vom Lichtspalt 10 abgewandten Seite des Lichtwellenleiters 8 angeordnet.

Diese Reflexionsfläche 15 kann von einer aufgebrachten Reflexionsfolie oder einer zum Beispiel aufgedampften bzw. aufgesputterten Beschichtung gebildet sein. Die hierdurch geschaffene Reflexionsfläche 15 erhöht die Lichtausbeute, in dem das vom Leuchtmittel emittierte Licht, das vornehmlich auf diese Reflexionsfläche 15 trifft, effektiver zum Lichtspalt 10 hin abgelenkt wird, so dass der Anteil des insgesamt abgegebenen Lichts, der tatsächlich aus dem Lichtspalt 10 heraustritt, erhöht wird.

Alternativ oder zusätzlich zur Anordnung der Reflexionsfläche 15 am Dichtungsprofil 1 kann eine solche Reflexionsfläche 15 selbstverständlich auch an dem Lichtwellenleiter 8 selbst vorgesehen sein, insbesondere sofern dieser, wie in Figur 1 gezeigt, eine Ummantelung 14 aufweist, die besonders geeignet sein kann, außenseitig mit einer Reflexionsbeschichtung versehen zu werden.

Obwohl die Reflexionsfläche 15 in Figur 2 ausschließlich unmittelbar an den Lichtwellenleiter 8 angrenzend gezeigt ist, ist eine Verwendung einer derartigen Reflexionsfläche 15 an anderen Bauteilen ebenfalls denkbar, sofern bei diesen ein Fläche zur Verfügung steht, die als eine Reflexionsfläche 15 im vorstehend beschriebenen Sinne dienen kann. Zu denken wäre beispielsweise an die in Figur 2 gezeigte zusätzliche Reflexionsbeschichtung 15' auf der Rückseite des Hauptschenkels 5.

Durch die vorstehend genannten Maßnahmen kann die Lichtausbeute (der Anteil des vom Leuchtmittel emittierten Lichts, der tatsächlich aus dem Lichtspalt 10 heraustritt) verbessert werden oder es kann bei vergleichbarer Lichtausbeute ein Leuchtmittel geringerer Leistung verwendet werden.

Das Leuchtmittel 8 muss nicht notwendiger Weise ein sich über die gesamte Zierleiste durchgehend erstreckender Lichtwellenleiter 8 sein. Je nach Anwendungsfall kann sich der Lichtwellenleiter 8 auch nur über eine Teillänge der Zierleiste erstrecken oder es können mehrere, bevorzugt mehrere unmittelbar aneinander angrenzende Leuchtmittel vorgesehen sein, die selektiv ansteuerbar sind, beispielsweise um nur bestimmte, ausgewählte Informationen darzustellen oder um gezielt voneinander abgrenzbare Bereich separat zu beleuchten.

Ein weiterer Vorteil der beschriebenen Erfindung im Allgemeinen sowie der in den Figuren gezeigten Ausführungsformen besteht darin, dass die hinterleuchteten Zierleisten ebenso wie kompatible, nicht hinterleuchtete Zierleisten wahlweise auf ein und dasselbe Trägerprofil bzw. Dichtungsprofil 1 aufgesetzt werden können. Dichtfunktion und Optik bzw. Leuchtfunktion der Baugruppe sind vollständig voneinander getrennt, so dass allein die Zierleiste die optische Funktion übernimmt. Das Dichtungsprofil 1 muss nicht speziell für den Einsatz einer hinterleuchteten Zierleiste vorbereitetet oder gezielt hierfür ausgewählt werden.

Für den Fahrzeughersteller besteht die Möglichkeit, das Fahrzeug allein durch die Auswahl der auf das für alle Fahrzeugausstattungen gleiche Dichtungsprofil 1 aufzusetzenden Zierleiste 2 optisch deutlich aufzuwerten, beispielsweise im Rahmen eines als Sonderzubehör angebotenen Lichtpakets.

Auch können so Fahrzeuge, die ursprünglich eine nicht hinterleuchtete Zierleiste aufwiesen, problemlos und handwerklich besonders einfach nachgerüstet werden, ohne dass das Austauschen des Dichtungsprofils 1 notwendig wäre.

### Bezugszeichenliste:

- 1: Dichtungsprofil
- 2: Profilleiste
- 3: obere Sichtkante
- 4: untere Sichtkante
- 5: Hauptschenkel
- 6: oberer Funktionsschenkel
- 7: unterer Funktionsschenkel
- 8: Lichtwellenleiter

- 10: Lichtspalt
- 11: Fensterscheibe
- 12: Fahrzeugaußenfläche
- 13: Zierfläche
- 14: Ummantelung
- 15: Reflexionsfläche

- S: Lichtspaltbreite
- A: Abstand Lichtwellenleiter zu Sichtkante
- Z: Zierseite
- F: Funktionsseite

## Patentansprüche

1. Kombination eines Dichtungsprofils (1) und einer hinterleuchteten, auf dem Dichtungsprofil (1) angeordneten Zierleiste für ein Kraftfahrzeug, wobei die Zierleiste eine Profilleiste (2) aufweist, die bei bestimmungsgemäßer Endmontage am Kraftfahrzeug eine vom Kraftfahrzeug weg gerichtete Zierseite (Z) mit einer äußerlich sichtbaren Zierfläche (13) und eine zum Fahrzeug hin gerichtete Funktionsseite (F) definiert, wobei die Zierfläche (13) von einer unteren Sichtkante (4) begrenzt ist, und wobei die Kombination aus Dichtungsprofil (1) und Zierleiste derart ausgebildet ist, dass nach bestimmungsgemäßer Montage am Kraftfahrzeug ein von der unteren Sichtkante (4) begrenzter und sich entlang der Profilleiste (2) erstreckender Lichtspalt (10) verbleibt, aus dem das von dem Leuchtmittel (8) emittierte Licht nach außen sichtbar hervorzutreten vermag, wobei ein auf der Seite der Funktionsseite (F) angeordneter Lichtwellenleiter (8) als Leuchtmittel vorgesehen ist, der zumindest einen Teil der Profilleiste (2) zu hinterleuchten vermag, und das Dichtungsprofil (1) oder die Zierleiste eine Halterung für den Lichtwellenleiter (8) ausbildet, die derart ausgebildet ist, dass der in die Halterung eingesetzte Lichtwellenleiter (8) den Lichtspalt (10) zu durchleuchten vermag.

2. Kombination eines Dichtungsprofils (1) und einer beleuchteten Zierleiste nach Anspruch 1, **dadurch gekennzeichnet, dass** das Dichtungsprofil als Dichtungsprofil (1) für den Fensterschacht einer Fahrzeugtür ausgebildet ist.

3. Kombination eines Dichtungsprofils (1) und einer beleuchteten Zierleiste nach Anspruch 1 oder 2, **dadurch gekennzeichnet, dass** sich der Lichtwellenleiter (8) auf Seiten der Funktionsseite (F) entlang zumindest eines Teils der Profilleiste (2) erstreckt und außerhalb des Profilleistenquerschnitts, den Profilquerschnitt nicht durchdringend angeordnet ist.

4. Kombination eines Dichtungsprofils (1) und einer beleuchteten Zierleiste nach einem der vorhergehenden Ansprüche, **dadurch gekennzeichnet, dass** der Lichtwellenleiter (8) auf der Funktionsseite (F) der Profilleiste (2) an der Profilleiste (2) gehalten ist.

5. Kombination eines Dichtungsprofils (1) und einer beleuchteten Zierleiste nach einem der vorhergehenden Ansprüche, **dadurch gekennzeichnet, dass** an einem den Lichtwellenleiter (8) tragenden Schenkel (5, 7) der Profilleiste (2) eine Halterung für den Lichtwellenleiter (8) vorgesehen ist.

6. Kombination eines Dichtungsprofils (1) und einer beleuchteten Zierleiste nach dem vorhergehenden Anspruch, **dadurch gekennzeichnet, dass** die Halterung von einer Aufnahme gebildet ist, in die der Lichtwellenleiter (8) eingeklipst oder eingeklebt werden kann.

7. Kombination eines Dichtungsprofils (1) und einer beleuchteten Zierleiste nach einem der vorhergehenden Ansprüche, **dadurch gekennzeichnet, dass** die Profilleiste (2) einen Profilleistenquerschnitt mit einem Hauptschenkel (5), dessen nach außen gerichtete Oberfläche eine äußerlich sichtbare Zierfläche (13) bildet, und wenigstens einem auf der Funktionsseite (F) angeordneten unteren Funktionsschenkel (7) aufweist, und dass der Lichtwellenleiter (8) auf der Funktionsseite (F) rückseitig am Hauptschenkel (5) oder an dem unteren Funktionsschenkel (7) angeordnet ist.

8. Kombination eines Dichtungsprofils (1) und einer beleuchteten Zierleiste nach dem vorhergehenden Anspruch, **dadurch gekennzeichnet, dass** die Zierleiste derart ausgebildet ist, dass der Lichtspalt (10) unterhalb der unteren Sichtkante (4) des Hauptschenkels (5) der Profilleiste (2) gebildet ist.

9. Kombination eines Dichtungsprofils (1) und einer beleuchteten Zierleiste nach einem der vorhergehenden Ansprüche, **dadurch gekennzeichnet, dass** der Lichtwellenleiter (8) als Distanzhalter (14) zu fungieren vermag, wobei sie die Zierleiste über den Lichtwellenleiter (8) nach bestimmungsgemäßer Endmontage am Fahrzeug mittelbar oder unmittelbar abzustützen vermag.

10. Kombination eines Dichtungsprofils (1) und einer beleuchteten Zierleiste nach einem der vorherigen Ansprüche, **dadurch gekennzeichnet, dass** der Lichtwellenleiter (8) eine transparente oder transluzente Ummantelung (14) aufweist, insbesondere eine Schutzummantelung und/oder eine den Querschnitt bestimmende Ummantelung (14) und/oder eine den Lichtschein beeinflussende Ummantelung (14).

11. Kombination eines Dichtungsprofils (1) und einer beleuchteten Zierleiste nach einem der vorhergehenden Ansprüche, **dadurch gekennzeichnet, dass** die Halterung im Dichtungsprofil (1) vorgesehenen ist.

12. Kraftfahrzeug mit einer Kombination eines Dichtungsprofils (1) und einer beleuchteten Zierleiste nach einem der vorhergehenden Ansprüche , wobei der Lichtspalt zwischen einer Fahrzeugaußenfläche des Kraftfahrzeugs und der Zierleiste vorgesehen ist.

## Claims

1. Combination of a sealing profile (1) and a backlit trim strip arranged on the sealing profile (1) for a motor vehicle, the trim strip having a profiled strip (2) which, when finally mounted on the motor vehicle as intended, defines a decorative side (Z) directed away from the motor vehicle and having an outwardly visible decorative surface (13), and a functional side (F) directed towards the vehicle, the decorative surface (13) being bounded by a lower visible edge (4), and the combination of sealing profile (1) and trim strip being designed in such a way that, when finally mounted on the motor vehicle as intended, a light gap (10) bounded by the lower visible edge (4) and extending along the profiled strip (2) remains, from which the light emitted by the lighting means (8) can visibly emerge to the outside, wherein an optical waveguide (8) arranged on the side of the functional side (F) is provided as lighting means, which is capable of backlighting at least a part of the profiled strip (2), and the sealing profile (1) or the trim strip forms a holder for the optical waveguide (8), which is designed in such a way that the optical waveguide (8) inserted into the holder is able to illuminate the light gap (10).

2. Combination of a sealing profile (1) and an illuminated trim strip according to claim 1, **characterized in that** the sealing profile (1) is designed as a sealing profile (1) for the window channel of a vehicle door.

3. Combination of a sealing profile (1) and an illuminated trim strip according to claims 1 or 2, **characterized in that** the optical waveguide (8) extends on the side of the functional side (F) along at least part of the profiled strip (2) and is arranged outside the profiled strip cross section so as not to penetrate the profile cross section.

4. Combination of a sealing profile (1) and an illuminated trim strip according to one of the preceding claims, **characterized in that** the optical waveguide (8) is held on the profiled strip (2) on the functional side (F) of the profiled strip (2).

5. Combination of a sealing profile (1) and an illuminated trim strip according to one of the preceding claims, **characterized in that** a holder for the optical waveguide (8) is provided on a limb (5, 7) of the profiled strip (2) carrying the optical waveguide (8).

6. Combination of a sealing profile (1) and an illuminated trim strip according to the preceding claim, **characterized in that** the holder is formed by a receptacle into which the optical waveguide (8) can be clipped or glued.

7. Combination of a sealing profile (1) and an illuminated trim strip according to one of the preceding claims, **characterized in that** the profiled strip (2) has a profiled strip cross section with a main limb (5), whose outwardly directed surface forms an outwardly visible decorative surface (13), and at least one lower functional limb (7) arranged on the functional side (F), and **in that** the optical waveguide (8) is arranged on the functional side (F) on the rear side of the main limb (5) or on the lower functional limb (7).

8. Combination of a sealing profile (1) and an illuminated trim strip according to the preceding claim, **characterized in that** the trim strip is designed in such a way that the light gap (10) is formed below the lower visible edge (4) of the main limb (5) of the profiled strip (2).

9. Combination of a sealing profile (1) and an illuminated trim strip according to one of the preceding claims, **characterized in that** the optical waveguide (8) is capable of functioning as a spacer (14), whereby it is capable of directly or indirectly supporting the trim strip via the optical waveguide (8), when finally mounted on the motor vehicle as intended.

10. Combination of a sealing profile (1) and an illuminated trim strip according to one of the preceding claims, **characterized in that** the optical waveguide (8) has a transparent or translucent sheathing (14), in particular a protective sheathing and/or a sheathing (14) which determines the cross section and/or a sheathing (14) which influences the light beam.

11. Combination of a sealing profile (1) and an illuminated trim strip according to one of the preceding claims, **characterized in that** the holder is provided in the sealing profile (1).

12. Motor vehicle with a combination of a sealing profile (1) and an illuminated trim strip according to one of the preceding claims, wherein the light gap is provided between a vehicle outer surface of the motor vehicle and the trim strip.

## Revendications

1. Combinaison d'un profilé d'étanchéité (1) et d'une moulure rétroéclairée disposée sur le profilé d'étanchéité (1) pour un véhicule automobile, la moulure comprenant une bande profilée (2) qui, lors du montage final prévu sur le véhicule automobile, définit un côté de moulure (Z) opposé au véhicule automobile avec une surface décorative (13) visible de l'extérieur et un côté fonctionnel (F) tourné vers le véhicule, la surface décorative (13) étant délimitée par un bord inférieur visible (4) et dans laquelle la combinaison du profilé d'étanchéité (1) et de la moulure est conçue de telle sorte qu'il subsiste, lors du montage final prévu sur le véhicule automobile, une fente lumineuse (10) délimitée par le bord inférieur visible (4), qui s'étend le long de la bande profilée (2) et de laquelle la lumière émise par le moyen d'éclairage (8) peut sortir de manière visible vers l'extérieur, de laquelle un guide d'ondes lumineuses (8) est disposé du côté du côté fonctionnel (F) qui est prévu comme moyen d'éclairage et qui est capable de rétroéclairer au moins une partie de la bande profilée (2), et le profilé d'étanchéité (1) ou la moulure forme un support pour le guide d'ondes lumineuses (8) qui est conçu de telle sorte que le guide d'ondes lumineuses (8) inséré dans le support puisse éclairer la fente lumineuse (10).

2. Combinaison d'un profilé d'étanchéité (1) et d'une moulure éclairée selon la revendication 1, **caractérisée en ce que** le profilé d'étanchéité (1) est conçu comme un profilé d'étanchéité (1) pour le puits de fenêtre d'une porte de véhicule.

3. Combinaison d'un profilé d'étanchéité (1) et d'une moulure éclairée selon la revendications 1 ou 2, **caractérisée en ce que** le guide d'ondes lumineuses (8) s'étend du côté du côté fonctionnel (F) le long d'au moins une partie de la bande profilée (2) et est disposé à l'extérieur de la section transversale de la bande profilée de manière à ne pas pénétrer dans la section transversale du profilé.

4. Combinaison d'un profilé d'étanchéité (1) et d'une moulure éclairée selon l'une des revendications précédentes, **caractérisée en ce que** le guide d'ondes lumineuses (8) est maintenu sur la bande profilée (2) sur le côté fonctionnel (F) de la bande profilée (2).

5. Combinaison d'un profilé d'étanchéité (1) et d'une moulure éclairée selon l'une des revendications précédentes, **caractérisée en ce qu'**un support pour le guide d'ondes lumineuses (8) est prévu sur une branche (5, 7) de la bande profilée (2) portant le guide d'ondes lumineuses (8).

6. Combinaison d'un profilé d'étanchéité (1) et d'une moulure éclairée selon la revendication précédente, **caractérisée en ce que** le support est formé par un réceptacle dans lequel le guide d'ondes lumineuses (8) peut être clipsé ou collé.

7. Combinaison d'un profilé d'étanchéité (1) et d'une moulure éclairée selon l'une des revendications précédentes, **caractérisée en ce que** la bande profilée (2) présente une section transversale de bande profilée avec une branche principale (5), dont la surface dirigée vers l'extérieur forme une surface décorative (13) visible de l'extérieur, et au moins une branche fonctionnelle inférieure (7) disposée sur le côté fonctionnel (F), et **en ce que** le guide d'ondes lumineuses (8) est disposé sur le côté fonctionnel (F) sur la face arrière de la branche principale (5) ou sur la branche fonctionnelle inférieure (7).

8. Combinaison d'un profilé d'étanchéité (1) et d'une moulure éclairée selon la revendication précédente, **caractérisée en ce que** la bande de garniture est conçue de telle manière que la fente lumineuse (10) est formée sous le bord inférieur visible (4) de la branche principale (5) de la bande profilée (2).

9. Combinaison d'un profilé d'étanchéité (1) et d'une moulure éclairée selon l'une des revendications précédentes, **caractérisée en ce que** le guide d'ondes optiques (8) est capable de fonctionner comme une entretoise (14), de sorte qu'il est capable de supporter directement ou indirectement la moulure par le guide d'ondes lumineuses (8) après le montage final sur le véhicule comme prévu.

10. Combinaison d'un profilé d'étanchéité (1) et d'une moulure éclairée selon l'une des revendications précédentes, **caractérisée en ce que** le guide d'ondes lumineuses (8) présente une gaine transparente ou translucide (14), en particulier une gaine de protection et/ou une gaine (14) qui détermine la section transversale et/ou une gaine (14) qui influence le faisceau lumineux.

11. Combinaison d'un profilé d'étanchéité (1) et d'une moulure éclairée selon l'une des revendications précédentes, **caractérisée en ce que** le support est prévu dans le profilé d'étanchéité (1).

12. Véhicule automobile comprenant une combinaison d'un profilé d'étanchéité (1) et d'une moulure éclairée selon l'une quelconque des revendications précédentes, dans lequel la fente lumineuse est prévu entre une surface extérieure du véhicule automobile et la moulure.
